# EUROPEAN PATENT SPECIFICATION

(11) **EP 3 560 777 B1**
(45) Date of publication and mention of the grant of the patent: **28.12.2022**
(21) Application number: 18169660.0
(22) Date of filing: 26.04.2018
(51) Int. Cl.: B60T 7/10

(54) **PARKING BRAKE FOR A MOTOR VEHICLE, AND METHOD TO RELEASE A PARKING BRAKE SYSTEM**
FESTSTELLBREMSE FÜR EIN KRAFTFAHRZEUG UND VERFAHREN ZUM LÖSEN EINER FESTSTELLBREMSANLAGE
FREIN DE STATIONNEMENT POUR UN VÉHICULE AUTOMOBILE ET PROCÉDÉ POUR LIBÉRER UN SYSTÈME DE FREIN DE STATIONNEMENT

(43) Date of publication of application: 30.10.2019
(73) Proprietor: FCA Italy S.p.A., 10135 Torino (IT)
(72) Inventor: BADINO, Renato, 10135 TORINO (IT); BELLATO, Enrico, 10135 TORINO (IT); GABIATI, Giovanni, 10135 TORINO (IT); GRILLO, Massimo, 10135 TORINO (IT); LELUZZI, Michele, 10135 TORINO (IT); LUCA', Stefano, 10135 TORINO (IT)
(74) Representative: Lovino, Paolo

(56) References cited:
- EP-A2- 1 285 831
- EP-A2- 2 674 335
- JP-A- H0 958 427
- JP-A- S60 252 048

## Description

The invention relates to a parking brake system for a motor vehicle and to a method for the release thereof.

As it is known, the parking brake of a motor vehicle usually is operated by manually lifting a hand brake lever, which is located close to the driver's seat and is hinged to the frame of the motor vehicle so that it can rotate around a horizontal axis between a lowered position and a lifted position.

For safety reasons, the hand brake lever has an end coupled to a releasable ratchet mechanism, which is aimed at preventing the hand brake lever from being lowered to loosen or deactivate the parking brake.

The ratchet mechanism generally is provided with a toothed sector, in a fixed position relative to the frame of the motor vehicle, and with a hook hinged to the hand brake lever. In particular, the hook is floating, relative to an axis parallel to the aforesaid horizontal axis, between angular positions in which it engages and disengages the toothed sector so as to lock and release, respectively, the downward rotation of the hand brake lever. On the contrary, the upward rotation of the hand brake lever can take place freely and regardless of the angular position of the hook.

In order to release the ratchet mechanism and deactivate the parking brake, a driver usually exerts a pressure upon a button arranged on the hand brake lever at an end opposite the one coupled to the ratchet mechanism.

The button is coupled to an inner lever mechanism of the hand brake lever, which controls the hook of the ratchet mechanism in such a way that said hook is moved to the toothed sector disengagement position when the driver presses the button. Vice versa, when the driver releases the button, the hook goes back to engaging the toothed sector through the reaction of an elastic return means.

In some cases, the lever mechanism is replaced by an electric actuator, which is operated in response to a pressing of the button to release the ratchet mechanism.

For example, documents EP2674335 and EP2886405 describe a hand lever mechanism provided with an electric actuator, which is connected to a button and controls the release of a ratchet mechanism to set free the movement of the hand brake lever in response of the button pressing.

Document JP S 60 252048 A discloses a parking brake system capable of automatically actuating a parking brake mechanism.

Even though the elimination of the lever mechanism leads to a significant space saving, which allows the design of hand brake levers with more ergonomic and aesthetic shapes, there is the need to improve existing solutions reducing the number of components and increasing the versatility and the user-friendliness thereof.

Therefore, the object of the invention is to provide a parking brake system for a motor vehicle, which fulfils the above-mentioned need in a simple and economic manner.

According to the invention, there are provided a parking brake system and a method to release a parking brake system as set forth in the appended claims.

For a better understanding of the present invention, several embodiments, which are provided by mere way of nonlimiting examples, will be now illustrated with reference to the accompanying drawings, wherein:
- figure 1 schematically shows a parking brake system according to the invention;
- figure 2 is a block diagram showing steps of a method to release the parking brake system according to an embodiment of the invention;
- figure 3 is a block diagram showing steps of a method to release the parking brake system according to a further embodiment of the invention;
- figure 4 is a block diagram showing steps of a method to release the parking brake system according to a further embodiment of the invention; and
- figure 5 is a block diagram showing steps of a method to electronically release the parking brake system according to a further embodiment of the invention.

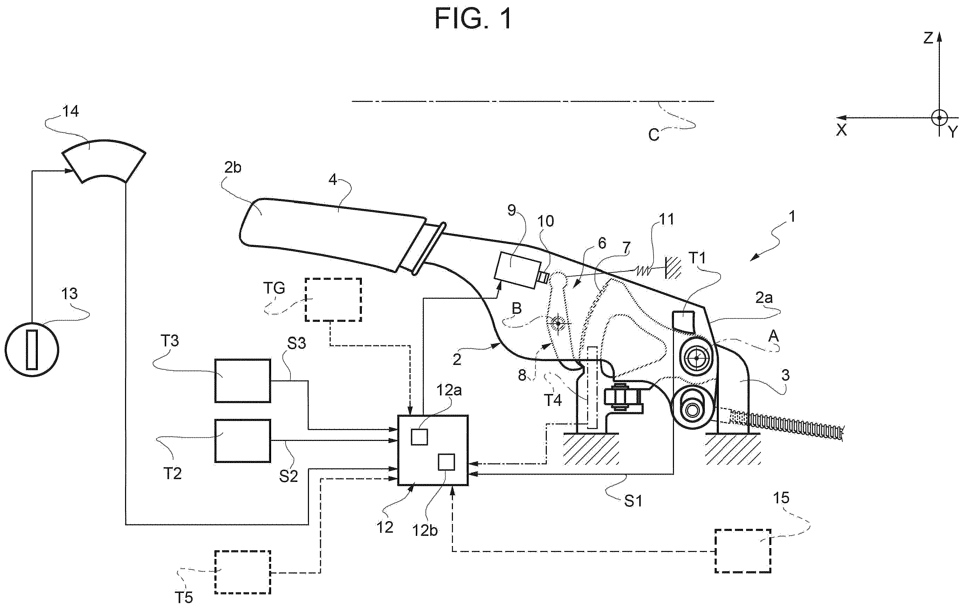

In figure 1, number 1 is indicative of a parking brake system for a motor vehicle. The system 1 is shown in a three-axis system with axes X, Y, Z orthogonal to one another.

In particular, the system 1 comprises:
- a hand brake lever 2, which:
   a) is arranged, for example, beside a seat (not shown) of the motor vehicle;
   b) is coupled to a support bracket 3 of the motor vehicle, for example at an end 2a, so as to rotate in a lifting direction from a rest position, in which the parking brake of the motor vehicle is deactivated, around a horizontal axis A (parallel to the axis Y) in order to assume a plurality of active positions, in each of which the parking brake acts upon wheels of the motor vehicle so as to brake it; and
   c) comprises, at an end 2b opposite the end 2a, a handle 4 to make it easier for a driver of the motor vehicle to move the lever 2;
- a ratchet mechanism 6, which comprises:
   a) a toothed sector 7, which is obtained on the support bracket 3, and
   b) a hook 8, which is hinged to the lever 2 so as to be able to rotate around an axis B, parallel to the axis A, between a locking position and a release position, in which a first end of the hook 8 engages and disengages the toothed sector 7 so as to forbid and permit, respectively, a rotation of the lever 2 in a lowering direction in order to loosen or deactivate the parking brake.
- an actuator 9, for example an electromagnetic linear actuator, which:
   a) is arranged at a second end of the hook 8,
   b) comprises an output rod 10, and
   c) is adapted to control the movement of the output rod 10 between a retracted position, in which the output rod 10 is detached from the second end of the hook 8, and an extracted position, in which the output rod 10 pushes the second end of the hook 8 in such a way that the latter rotates from the locking position towards the release position, preferably against the action of a return spring 11, which is coupled to the second end and is preloaded so as to hold the hook 8 in the locking position; and
- a transducer T1, which is coupled to the lever 2 and is configured to detect a quantity G1 indicating a rotation of the lever 2 in the lifting direction and to generate a relative transduced signal S1, which is a function of the detected quantity G1.

The system 1 further comprises a control unit 12, which is coupled to the transducer T1 and is configured to receive the transduced signal S1, to extract from the signal S1 a primary information concerning the quantity G1, and to control the actuator 9 so as to release the mechanism 6, namely so as to move the hook 8 to the release position when the primary information fulfils a predetermined relation (for example, the exceeding of a threshold).

Furthermore, the control unit 12 controls the release of the mechanism 6 by means of the actuator 9 depending on at least a further side information, which is indicative of an actual intention of the driver of the motor vehicle of rotating the lever 2 in the lowering direction in order to loosen or deactivate the parking brake. By so doing, the mechanism 6 is prevented from being accidentally released, for example due to an unintentional movement of the driver or of a passenger inside the motor vehicle.

The system 1 further comprises a transducer T2, which:
- is coupled to a brake pedal (not shown) of the motor vehicle to detect the activation of said brake pedal and, in response to said activation, generate a signal S2; and
- is connected to the control unit 12 so that the latter can receive the signal S2 and identify the receipt of the signal S2 as the aforesaid side information needed to control the release of the mechanism 6.

The transducer T2 may comprise, for example, a proximity sensor to identify the position of the brake pedal, or an electromechanical switch, in particular a NO or NC switch or sensors for the force applied to the pedal.

Alternatively, the transducer T2 can be coupled to other elements of the service brake assembly (for example, at a brake caliper or at a brake liquid pump or at brake liquid distribution ducts, etc.), so as to detect the activation of the brake pedal and, in response to said activation, generate a signal S2.

The transducer T2 can be an additional element with respect to the components of the known service brake assembly, or it can be an element of the service brake assembly where the signal S2 is picked up.

Since the activation of the brake pedal by the driver causes the activation of a service brake assembly of the motor vehicle, the activation of the brake pedal can be correlated with an actual intention of the driver of deactivating the parking brake (the activation of the brake pedal is, indeed, redundant to the that of the parking brake and, therefore, can be considered as an indication of the driver's intention of moving the lever 2 to the rest position).

The system 1 comprises, as an alternative or in addition to the transducer T2, a transducer T3, which:
- is coupled to an accelerator pedal (not shown) of the motor vehicle to detect the activation of said accelerator pedal and, in response to said activation, generate a signal S3; and
- is connected to the control unit 12 so that the latter can receive the signal S3 and identify the receipt of the signal S3 as the aforesaid side information needed to control the release of the mechanism 6.

The transducer T3 is chosen, for example, in the group of angular position transducers and is, in particular, a potentiometer, inductive, optical or a Hall effect transducer.

The transducer T3 can be an additional element in addition to the components already present in known motor vehicles, or it can be an element of the motor vehicle where the signal S3 is picked up.

In this context, also the activation of the accelerator pedal by the driver is indicative of the driver's intention of deactivating the parking brake, so that the vehicle can move.

According to an aspect of the present invention, the control unit 12 comprises a memory 12a and a processor 12b. In a first operating mode of the control unit 12, when the signal S1 is received, the processor 12b and the memory 12a cooperate to extract the primary information (numerical value) concerning the quantity G1 and to compare the primary information with a predetermined threshold value, which is stored in the memory 12a. The exceeding of the threshold value by the primary information identifies a significant rotation of the lever 2 in the lifting direction. When, in the first operating mode, the control unit 12 receives one of the signals S2, S3, the control unit 12 controls the actuator 9 in such a way that the output rod 10 presses against the second end of the hook 8 and the latter rotates so as to disengage the toothed sector 7 and allow a rotation of the lever 2 towards the rest position.

In other words, in order to release the movement of the lever 2, the driver has to operate one or both the brake pedal and the accelerator pedal, and simultaneously slightly lift the lever 2 until the primary information extracted by the control unit 12 reaches the aforesaid predetermined relation with the threshold value.

According to an embodiment of the present invention, the transducer T1 is an angle sensor, for example an angular potentiometer or an encoder coupled to the lever at the axis A. In this case, the transducer T1 is adapted to measure an angle α of inclination of the lever 2 with respect to a horizontal plane on which the axis A lies.

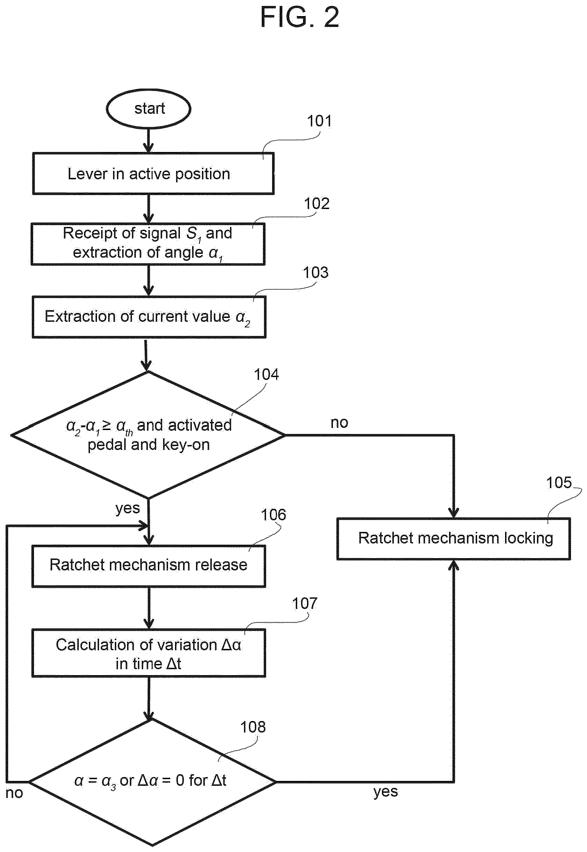

Figure 2 shows, by means of a block diagram, steps of a method to release the movement of the lever 2 towards the rest position, starting from the measurements of the angle α to be carried out through the transducer T1.

In an initial step of the method of figure 2 (step 101 of figure 2), the lever 2 stands in an active starting position, in which the angle α has a constant value α₁. The output rod 10 of the actuator 9 is in the retracted position and, therefore, the hook 8 is held in the locking position by the spring 11. Therefore, the transducer T1 measures the angle α₁ and generates the signal S1 as a function of the angle α₁.

Then, step 102, the control unit 12 acquires the signal S1, extracts the value of the angle α₁ from the signal S1 and stores the latter value.

Then, step 103, the control unit 12 extracts a current value α₂ of the angle α from the signal S1 and compares it with the stored value α₁.

The comparison operation allows a variation of the angular position of the lever 2 in the lifting direction to be determined. Indeed, an extraction from the signal S1, by the control unit 12, of a current value α₂ greater than the stored value α₁ corresponds to information indicative of the lifting of the lever 2. Actually, when the driver lifts the lever 2, the transducer T1 measures an angle α with an increasing value and generates a signal S1 that reflects the increase in the value of the angle α.

In other words, the control unit 12 calculates the difference between the current value and the stored value of the angle α (α₂-α₁), which is equal to zero as long as the lever 2 remains in the active position, whereas it increases as the lever 2 is lifted from the active position.

In the following step 104, the control unit 12 determines the occurrence of a plurality of conditions indicative of the actual intention of the driver of moving the lever 2 to the rest position. In particular, the control unit 12 detects whether:
- the difference α₂-α₁ exceeds a threshold value αₜₕ; and
- the brake pedal and/or the accelerator pedal was operated by the driver.

Optionally, the control unit 12 is configured to detect whether the driver has brought an ignition key (not shown) of the motor vehicle to a contact position (or "key-on" position) inside an ignition switch 13 of the motor vehicle, so as to turn on an instrument panel 14 of the motor vehicle. For example, the control unit 12 is electrically connected to the instrument panel 14 in order to detect the turning on thereof. Alternatively, the control unit 12 is connected to the ignition switch 13 and directly detects the position of the key.

The turning on of the instrument panel 14 is a further condition, optional and additional to the two above-mentioned conditions, indicative of the intention of the driver of deactivating the parking brake and, hence, move the lever 2 to the rest position.

In case the condition check of step 104 produces a negative result (output NO of step 104), step 105 is next, during which the control unit 12 controls the actuator 9 so that it holds the output rod 10 in the retracted position and the hook 8 in the locking configuration by means of the spring 11.

Vice versa, output YES of step 104, step 106 is next, during which the control unit 12 controls the actuator 9 so that it moves the output rod 10 to the extracted position and the hook 8 to the release position, against the action of the spring 11.

At this point, the driver is free to handle the lever 2 as he/she likes and, in particular, can move the lever 2 to the rest position. When the lever 2 is in the rest position, the transducer T1 measures a value α₃ of the inclination angle α of the lever 2; said value α₃ is stored in the memory 12a of the control unit 12.

The storing of the value α₃ can be used to determine when the lever 2 reaches the rest position.

When the lever 2 reaches the rest position, the control unit 12 can control the actuator 9 in such a way that the output rod 10 goes back to the retracted position and the hook 8 goes back to the locking position (the release of the rotation of the lever 2 towards the rest position becomes, in fact, scarcely useful).

To this aim, by way of example, the control unit 12 can simply de-energize the actuator 9 so that the second end of the hook 8 pushes, through the reaction of the spring 11, the output rod 10 to the retracted position.

The Applicant further considered the fact that the driver could want to stop the movement of the lever 2 in an active intermediate position between the active starting position and the rest position. In this case, the control unit 12 must control the locking of the ratchet mechanism 6 even when the lever 2 is in positions other than the rest position. This intention can be established by the control unit 12 by identifying a standing of the lever 2 in the active intermediate position for a predetermined amount of time, which is stored in the memory 12a of the control unit 12. To this aim, during the movement of the lever 2 towards the rest position (step 107 of figure 2), the control unit 12 calculates, based on the received signal S1, a variation Δα of the angle α in a predetermined time interval Δt. A variation Δα with zero value for the duration of the interval Δt can be correlated with the standing of the lever 2 in the desired active intermediate position.

Then, step 108, the control unit 12 detects whether the value of the angle α is equal to α₃, or whether the variation Δα is equal to zero for the entire interval Δt.

In case both conditions of step 108 do not occur (output NO of step 108), the control unit 12 controls the actuator 9 so that it keeps the ratchet mechanism 6 released. Vice versa (output YES of step 108), the control unit 12 controls the actuator 9 so that it moves the output rod 10 to the retracted position and the hook 8 to the locking position.

In an embodiment alternative to the one of figure 2, the transducer T1 is an acceleration sensor, for example an accelerometer fixed to the lever 2. In this case, the transducer T1 is designed to measure an acceleration a of the lever 2 along an axis C, in particular orthogonal to the axis A and parallel to the driving direction of the motor vehicle (namely, parallel to the axis X).

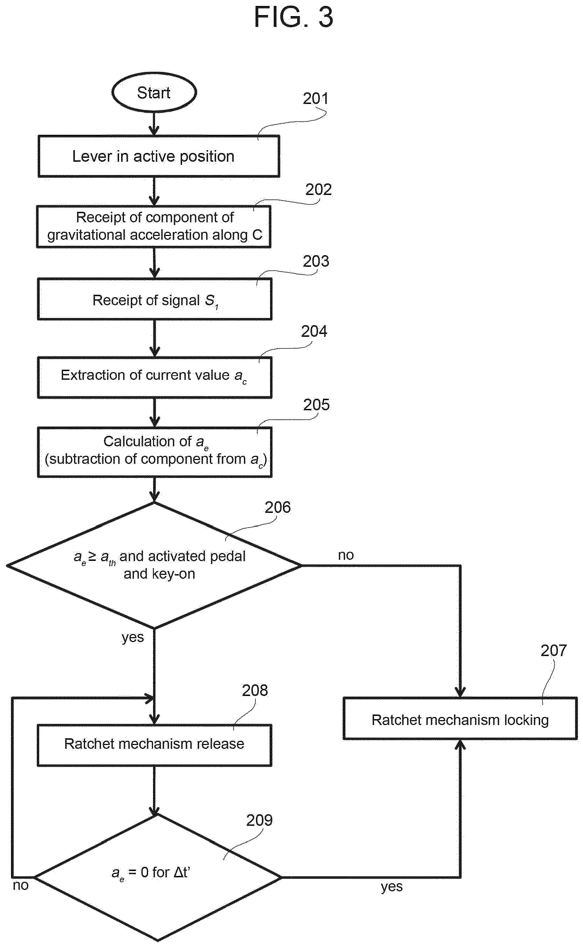

Figure 3 shows, by means of a block diagram, steps of a method to release the movement of the lever 2 towards the rest position, starting from the measurements of the acceleration a obtained by means of the transducer T1.

In an initial step of the method of figure 3 (step 201), the lever 2 stands in an active starting position (similarly to step 101 of figure 2). The transducer T1 provides an acceleration value a that is equal to the component of Earth's gravitational acceleration along axis C (here, along Z). In particular, with axis C horizontal and the motor vehicle on a flat surface, the transducer T1 would measure an acceleration a equal to zero.

In this embodiment, the system 1 further comprises one or more sensors or transducers (for example, one or more accelerometers) TG (shown in figure 1) which are configured to provide information concerning the value of the component of Earth's gravitational acceleration along axis C. These further one or more sensors TG provide a measurement that is independent of the one provided by the transducer T1 and, in particular, are not constrained to the lever 2.

Then, step 202, the control unit 12 receives, from said one or more sensors T6, the information concerning the value of the component of Earth's gravitational acceleration along axis C.

In step 203, the control unit 12 receives the signal S1 from the transducer T1.

Then, step 204, the control unit 12 extracts the current value a_{c} of the acceleration a from the signal S1.

Then, step 205, the control unit 12 carries out a subtraction operation to subtract the value of the component of Earth's gravitational acceleration from the current value a_{c}. By so doing, the control unit 12 obtains the actual acceleration aₑ to which the lever 2 is subjected solely because of the action exerted by the driver upon the lever 2 itself; in this way, the actual movement state of the lever 2 can be determined.

In step 206, the control unit 12 determines the occurrence of a plurality of conditions, in particular the same ones of step 104 of figure 2. However, in the embodiment of figure 3, the control unit 12 does not directly monitor the inclination angle of the lever 2, but detects whether the acceleration aₑ of the lever 2 exceeds a threshold acceleration aₜₕ.

After step 206, the next steps are step 207 (output NO of step 206) or 208 (output YES of step 206). Steps 207 and 208 correspond to steps 105 and 106, respectively, of figure 2 and, for this reason, they are not further described herein.

After step 208 there is step 209, during which the control unit 12 detects whether the acceleration value aₑ is substantially equal to zero (except for a background noise detected by the transducer T1) for the entire duration of a predetermined time interval Δt'. Indeed, an acceleration value aₑ constantly equal to zero in the interval Δt' would indicate the standing of the lever 2 in a driver's desired position, regardless of whether it is the rest position or the aforesaid active intermediate position.

Therefore, upon occurrence of the condition aₑ=0 in the interval Δt', the control unit 12 controls (output YES of step 208) the actuator 9 so that it moves the output rod 10 to the retracted position and the hook 8 to the locking position. Vice versa (output NO of step 208), the control unit 12 holds the rod 10 in the extracted position.

According to a further embodiment of the present invention that is alternative to the ones of figures 2 and 3, the transducer T1 is a force sensor, for example a load cell, more preferably a strain gauge load cell, configured to measure a force F exerted upon the lever 2. For example, the transducer T1 is firmly coupled to the lever 2 and measures a force depending on the state of tension upon the lever 2.

Furthermore, in this embodiment, the system 1 comprises a transducer T4 (shown in figure 1), which is connected to the control unit 12 and is configured to measure the displacement x of a point of the lever 2 and generate a signal S4 based on said displacement x. For example, the transducer T4 measures the vertical displacement (namely, along z) of a point in a central area of the lever 2. Preferably, the transducer T4 is a potentiometer.

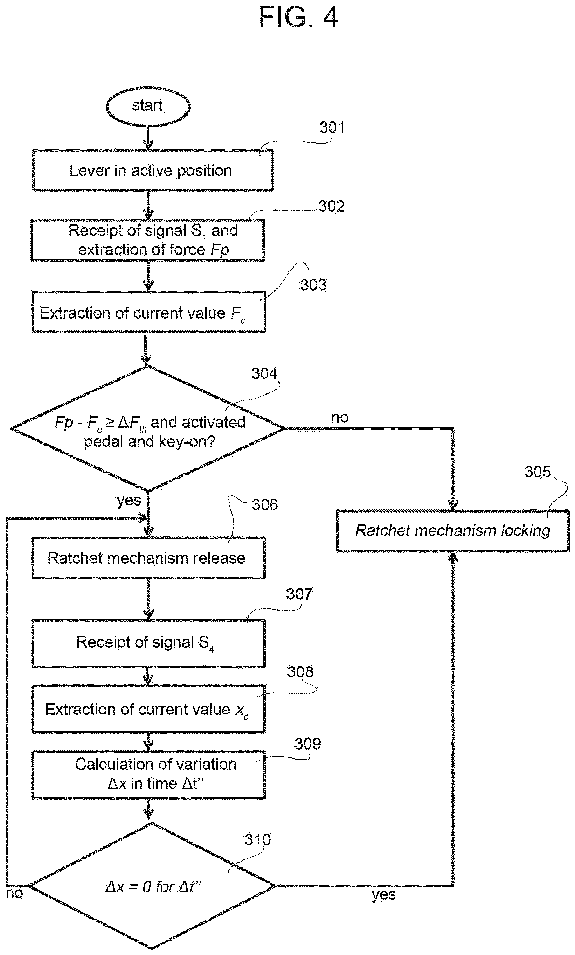

Figure 4 shows, by means of a block diagram, steps of a method to release the movement of the lever 2 towards the rest position, starting from the measurements of the force F carried out through the transducer T1.

In an initial step of the method of figure 4 (step 301), the lever 2, similarly to steps 101 and 201 described above, stands in an active starting position. As long as the driver does not handle the lever 2, the transducer T1 measures a constant force value Fₚ corresponding to the constraining reaction on the lever 2 provided by the ratchet mechanism 6 and, more in particular, by the toothed sector 7 on which the lever 2 rests by means of the hook 8, which engages the toothed sector 7 itself.

Then, step 302, the control unit 12 receives the signal S1, extracts the force value Fₚ from the signal S1 and stores said value on the memory 12a. This value can be used to determine a variation of the angular position of the lever 2 in the lifting direction.

Indeed, when the driver lifts the lever 2, the driver exerts a force upon the latter, which is concordant with the constraining reaction, so that the total tension state of the lever 2 decreases. In other words, by lifting the lever, the driver causes a force reduction between the ratchet mechanism 6 and the lever 2. As discussed more in detail below, the detection of a force value smaller than the one stored in the control unit 12 is, therefore, indicative of the lifting of the lever 2.

In order to detect the lifting of the lever 2, step 303, the control unit 12 extracts the current value F_{c} of the force F from the signal S1 and compares it with the stored value Fₚ.

Subsequently, step 304, the control unit 12 determines the occurrence of a plurality of conditions, in particular the same conditions as step 104 of figure 2; however, in this case, the control unit 12 does not directly monitor the inclination angle of the lever 2, but detects whether the difference between the current force value and the stored force value F (Fₚ-F_{c}) is greater than a threshold decrease ΔFₜₕ (since this condition is indicative of a significant lifting of the lever 2).

After step 304 there are steps 305, 306, which correspond, respectively, to steps 105, 106 of figure 2 (or, similarly, to steps 207 and 208 of figure 3).

Then, step 307, the control unit receives the signal S4 and, step 308, the control unit 12 extracts the current value x_{c} of the displacement x from the signal S4.

Then, step 309 is next, which partly corresponds to step 107 of figure 2, being different from the latter because of the fact that the control unit 12 calculates a variation Δx of the displacement x in a time interval Δt".

In the following step 310, the control unit checks whether the variation Δx is equal to zero for the entire duration of the interval Δt". If this last condition occurs (output YES of step 310), the control unit 12 control the actuator 9 so as to release the ratchet mechanism 6. Vice versa (output NO of step 310), the control unit 12 holds the rod 10 in the extracted position.

In addition to the embodiments of figures 2-4, the system 1 comprises, according to a preferred aspect of the present invention, a transducer T5 (shown in figure 1), which is configured to detect a movement state of the motor vehicle; the transducer T5 is, for example, a speedometer configured to measure the angular speed of a wheel (not shown) of the motor vehicle.

The transducer T5 is further configured to generate a signal S5 based on the measured angular speed and to send the signal S5 to the control unit 12.

Moreover, the system 1 comprises a group of failure sensors 15, known and therefore not described in detail, which are configured to detect a failure condition of the service brake assembly of the motor vehicle.

The control unit 12 is connected to the group of failure sensors 15 so as to be capable of receiving a failure warning concerning the service brake assembly. A failure of said brake assembly can be extremely dangerous, as the driver can brake the motor vehicle, during the movement thereof, only through the parking brake, in particular by lifting the lever 2.

The control unit 12, after having received the warning, can intervene by releasing the ratchet mechanism 6 and allowing the driver to move the lever 2 also towards the rest position, regardless of the conditions established during steps 104, 204 and 306 identified above.

Indeed, in this embodiment, the control unit 12 is configured to receive the signal S5, extract the value of the measured angular speed from the signal S5 and compare the extracted value with a predetermined threshold value that is indicative of the fact that the motor vehicle is in driving mode.

With the instrument panel 14 turned on (key in "key-on" position) and the motor vehicle in driving mode, the control unit 12 controls the actuator 9 so that it moves the output rod 10 to the extracted position when it receives the failure warning. By so doing, the hook 8 is moved to the disengagement position disengaging the toothed sector 7 and the driver can freely move the lever 2, so as to modulate the barking action through the parking brake.

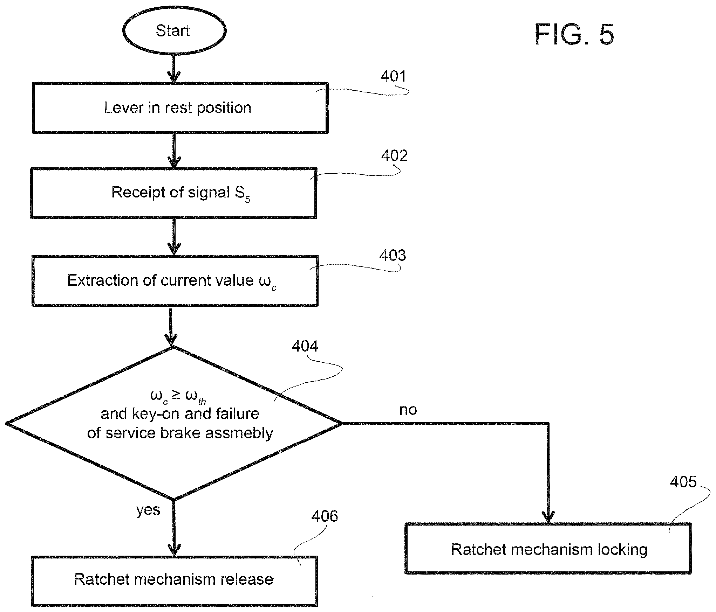

Figure 5 shows, through a block diagram, a second operating mode of the system 1 in case of failure of the service brake assembly.

In the initial step of the method of figure 5 (step 401), the lever 2 stands in the rest position while the motor vehicle travels at a speed which is such that the transducer T5 measures an angular speed ω at at least one wheel of the motor vehicle. Since the lever is in the rest position, the control unit 12 controls the actuator 9 so that the rod 10 is in the retracted position and the hook 8 engages the toothed sector 7.

In step 402, the control unit 12 receives the signal S5 generated by the transducer T5.

Then, step 403, the control unit extracts the current value ω_{c} of the angular speed ω of the wheel from the signals S5.

Hence, step 404, the control unit 12 checks whether:
- the current value ω_{c} exceeds a threshold value ωₜₕ; and
- it receives the failure warning of the service brake.

If at least one of the above-mentioned conditions does not occur (output NO of step 404), step 405, the control unit 12 controls the actuator 9 in such a way that it holds the output rod 10 in the retracted position.

Optionally, the control unit 12 also checks whether the instrument panel 14 was turned on by the driver or the key was placed in a contact position. If this condition does not occur either (output NO of step 404), the control unit 12 controls the actuator 9 so that it holds the output rod 10 in the retracted position.

Vice versa (output YES of step 404), step 406 is next, during which the control unit 12 controls the actuator 9 so as to release the ratchet mechanism 6. When at least one of the aforesaid conditions ceases to occur, the control unit controls the actuator 9 so that the hook 8 goes back to engaging the toothed sector 7.

Owing to the above, the advantages of the system 1 are evident.

Thanks to the control unit 12 and the transducers T1, T2, T3, T4, T5, the ratchet mechanism 6 can be released in an assisted manner and only based on a series of codified gestures of the driver, which are typical of the manual release action used for classic ratchet mechanisms known in the field of parking brakes.

Furthermore, it is possible to leave out the button on the lever 2 used to control the release of the ratchet mechanism 6.

As a consequence, the system 1 is particularly simple from a constructive point of view and has a minimum number of components, without affecting the safety of the motor vehicle or the sensations perceived by the driver.

The system 1 can further have different functionalities that make it particularly versatile to be used. In particular, the transducer T3 coupled to the accelerator pedal and connected to the control unit 12 allows the latter to control the release of the ratchet mechanism 6 based on the activation of the accelerator pedal. By so doing, the driver can comfortably move the lever 2 to the rest position while accelerating, so as to obtain a pickup torque which, for example, turns out to be especially useful in case of uphill starting.

Furthermore, the system 1 can be used to brake the motor vehicle in an ideal manner in case of failure of the service brake assembly. Indeed, the driver can directly freely move the lever 2 while the motor vehicle is moving, without having to press any button during the manoeuvre.

Moreover, the use of proper threshold values to permit the release of the ratchet mechanism 6 minimizes uncontrolled release risks, thus significantly increasing the safety of the system 1.

Finally, it is evident to a person skilled in the art that the system 1 described above, with reference to the accompanying drawings, can be subjected to changes and variations, without for this reason going beyond the scope of protection of the present invention as set forth in a appended claims.

For example, the transducers T1, T4 can be respectively configured to detect one or more quantities of different types, provided that said quantities are indicative of the movement (and, on the other hand, the standing), of the lever 2, so that the control unit 12 can determine when the lever 2 is moving or not. In particular, the embodiments described herein can be combined with one another so as to obtain new embodiments that, anyway, fall within the scope of protection set forth in the appended claims.

The transducer T1, should it be configured to measure a force, could be coupled to the toothed sector 7 instead of to the lever 2 and be configured to measure the force exerted by the lever 2 upon the toothed sector 7 through the hook 8 in the locking position. Indeed, by so doing, the transducer T1 would also indirectly detect the force exerted upon the lever 2 by the sector 7, because the latter is equal in modulus and opposite in direction to the one detected directly.

Furthermore, even though it fulfils the same functionality, the ratchet mechanism could be built differently from the one described and shown herein; for example, there could be no return spring 11 and the control unit 12 could control the actuator 9 so as to actively control the position of the output rod 10.

Moreover, the way in which the mechanism 6 is released in case of failure of the service brake assembly could be independent of the first operating mode, namely independent of the presence of the transducers T1, T2, T3 in the system 1.

Finally, the check of the turning-on of the instrument panel correspondingly to the key in "key-on" position is completely optional and carried out for the purpose of increasing the safety of the system 1. Similarly, the control unit 12 can check whether further additional features, in addition to the one described above, are fulfilled before releasing the ratchet mechanism 6, for example it can check the operation of one or more safety switches arranged at the instrument panel 14.

## Claims

1. A parking brake system (1) for a motor vehicle comprising:
- a support structure (3)suitable for being fixed to a frame of said motor vehicle;
- a lever (2), which is coupled to the support structure (3) in a rotary manner according to a first rotation direction starting from a rest position, so as to activate a parking brake of the motor vehicle, and according to a second rotation direction, which is opposite the first rotation direction, so as to loosen or deactivate the parking brake;
- a ratchet mechanism (6), which is operatively coupled to the lever (2) and is configured to lock the rotation of the lever in the second rotation direction in a releasable manner;
- an actuator (9), which is operatively coupled to the ratchet mechanism (6) and can be controlled so as to release the ratchet mechanism in order to permit a rotation in the second rotation direction;
- a first transducer (T1), which is coupled to at least one between said lever (2) and said ratchet mechanism (6) and is configured to detect a first quantity (G1) indicative of the rotation of the lever in the first rotation direction and to generate a first transduced signal (S1) based on the first detected quantity;
- a control unit (12), which is coupled to the first transducer (T1) and is configured to:
• receive the first transduced signal (S1); and
• extract first information associated with the first quantity (G1) from the first transduced signal (S1), **characterized in that** it further comprises a second transducer (T2; T3), which is suitable for being coupled to one between a brake pedal and an accelerator pedal of said motor vehicle and is configured to detect the activation, by a driver of the motor vehicle, of one between the brake pedal and the accelerator pedal, and to generate a second transduced signal (S2; S3) in response to said activation; and **in that** the control unit (12) is further configured to:
• receive the second transduced signal (S2; S3);
• compare the first information with a reference value;
• control said actuator (9) so as to release the ratchet mechanism (6) when the second transduced signal (S2; S3) is received and the first information reaches a predetermined relation with the reference value.

2. The system according to claim 1, further comprising a third transducer (T3; T2), which is suitable for being coupled to the other one between the brake pedal and the accelerator pedal of said motor vehicle and is configured to detect the activation, by a driver of the motor vehicle, of the other one between the brake pedal and the accelerator pedal, and to generate a third transduced signal (S3; S2) in response to said activation;
and in that the control unit (12) is further configured to:
- receive the third transduced signal (S3; S2); and
- control the actuator (9) so as to release the ratchet mechanism (6) when the second transduced signal (S2; S3) and/or the third transduced signal are received and the first information reaches the predetermined relation with the reference value.

3. The system according to claim 1 or 2, wherein the control unit (12) is further configured to:
• detect a contact position of a key of said motor vehicle, and
• control said actuator (9) so as to release the ratchet mechanism (6) when the contact position of the key is further detected.

4. The system according to any one of the preceding claims, wherein the first transducer (T1) is an angle transducer, and wherein:
• the first quantity (G1) is an angle (α) of inclination of the lever (2) relative to said support structure (3),
• the first information comprises an increase of the inclination angle (α₂-α₁) in the first rotation direction, and
• said predetermined relation is reached when said increase of the inclination angle (α₂₋α₁) equals or exceeds the reference value (αₜₕ).

5. The system according to any one of the claims 1-3, further comprising a fourth transducer (TG), which is configured to detect a first component of the Earth's gravitational acceleration along an axis (C), the first transducer (T1) being an acceleration sensor, and wherein:
• said first quantity is an acceleration vector (a) of said lever (2);
• said control unit (12) is configured to acquire the acceleration vector, extract a second component of acceleration (a_{c}) of the lever (2) along said axis (C), subtract the first component from the second component of acceleration obtaining the first information (aₑ);
• said predetermined relation being reached when the first information (aₑ) equals or exceeds said reference value (aₜₕ).

6. The system according to any one of the claims 1-3, wherein the first transducer (T1) is a force transducer, and wherein:
• said first quantity (G1) is a force (F) exerted by one between said lever (2) and said ratchet mechanism (6) upon the other one between said lever (2) and said ratchet mechanism (6);
• said first information comprises a decrease (Fₚ-F_{c}) of said force F); and
• said predetermined relation is reached when the decrease of said force (Fₚ-F_{c}) equals or exceeds said reference value (ΔFₜₕ).

7. The system according to any one of the claims 1-3, wherein, when said lever (2) stands in a position chosen by the driver, said first quantity (G1) is indicative of the standing of the lever (2),
the control unit (12) being further configured to control the actuator (9) so as to lock the ratchet mechanism (6) when the first quantity (G1) is indicative of the standing of said lever (2).

8. The system according to claim 7, wherein the first transducer (T1) is an angle transducer, and wherein:
• said first quantity (G1) is an angle (α) of inclination of the lever (2) relative to said support structure (3);
• said first quantity (G1) is indicative of the standing of the lever (2) in the position chosen by the driver, when a variation of the inclination angle (Δα) is equal to zero for a predetermined time interval (Δt) or said inclination angle (α) corresponds to the rest position of the lever (2) .

9. The system according to claim 8, further comprising a fourth transducer (TG), which is configured to detect a first component of Earth's gravitational acceleration along an axis (C), the first transducer (T1) being an acceleration sensor, and wherein:
• said first quantity is an acceleration vector (a) of said lever (2);
• said control unit (12) is configured to acquire the acceleration vector (a), extract a second component of acceleration (a_{c}) of the lever (2) along said axis (C), subtract the first component from the second component of acceleration, thus obtaining the first information (aₑ);
• said first quantity (G1) being indicative of the standing of the lever (2) in the position chosen by the driver, when the result of said subtraction is a zero value for a predetermined time interval (Δt').

10. The system according to any one of the claims 1-3 and comprising a fifth transducer (T4), which is operatively coupled to the lever (2) and is configured to detect a second quantity indicative of a standing of the lever in a position chosen by the driver and to generate a fourth transduced signal (S4) based on the second quantity,
the control unit (12) being further configured to:
• receive the fourth transduced signal (S4); and
• extract, from the fourth transduced signal (S4), second information concerning the standing of the lever in the position chosen by the driver;
• control, based on the second information, the actuator (9) so as to lock the ratchet mechanism (6).

11. A system according to claim 10, wherein:
• the second quantity is a displacement (x) of the lever (2);
• the second information comprises a variation (Δx) of said displacement (x); and
• the control unit (12) is further configured to control the actuator (9) so as to lock the ratchet mechanism (6) when the said variation (Δx) has a zero value for a predetermined time interval (Δt").

12. The system according to any one of the preceding claims, further comprising failure sensors (15), which are configured to detect a failure condition of a braking assembly of said motor vehicle, and a sixth transducer (T5), which is configured to detect a third quantity indicative of a moving state of the motor vehicle and to generate a fifth transduced signal (S5) based on said third quantity,
the control unit being coupled to the failure sensors (15) so as to receive a braking assembly failure warning and being further configured to:
• receive the fifth transduced signal (S5);
• extract, from the fifth transduced signal (S5), third information (ω) associated with the third quantity;
• compare the third information (ω) with a movement threshold (ωₜₕ);
• control said actuator (9) so as to release the ratchet mechanism (6) at least when:
a) it receives said failure warning, and
b) the third information (ω) equals or exceeds the movement threshold (ωₜₕ); and
• control the actuator (9) so as to lock the ratchet mechanism (6) when said third information (ω) is below the movement threshold (ωₜₕ).

13. A method to release a parking brake system (1) for a motor vehicle, the system comprising:
- a support structure (3) suitable for being fixed to a frame of said motor vehicle;
- a lever (2), which is coupled to the support structure (3) in a rotary manner according to a first rotation direction starting from a rest position, so as to activate a parking brake of the motor vehicle, and according to a second rotation direction, which is opposite the first rotation direction, so as to loosen or deactivate the parking brake;
- a ratchet mechanism (6), which is coupled to the lever (2) and is configured to lock the rotation of the lever (2) in the second rotation direction in a releasable manner;
- an actuator (9), which is operatively coupled to the ratchet mechanism (6) and can be controlled so as to release the ratchet mechanism (6) in order to permit a rotation in the second rotation direction,
the method comprising the step of detecting, by means of a first transducer (T1), which is coupled to at least one between said lever (2) and said ratchet mechanism (6), a first quantity (G1) indicative of the rotation of the lever in the first rotation direction and generating a first transduced signal (S1) based on the first detected quantity (G1),
**characterized by** further comprising the steps of:
- detecting, by means of a second transducer (T2; T3), which is suitable for being coupled to one between a brake pedal and an accelerator pedal of said motor vehicle, the activation, by a driver of the motor vehicle, of one between the brake pedal and the accelerator pedal, and generating a second transduced signal (S2; S3) in response to said activation;
- receiving (102; 203; 302), through a control unit (12), the first transduced signal (S1);
- extracting (103; 204; 303), by means of the control unit (12), first information associated with the first quantity (G1) from the first transduced signal (S1);
- receiving (104; 206; 304), through the control unit (12), the second transduced signal (S2; S3);
- comparing (104; 206; 304), by means of the control unit (12), the first information with a reference value; and
- controlling (105; 207; 305), by means of the control unit (12), the actuator (9) so as to release the ratchet mechanism (6) when the second transduced signal (S2; S3) is received and the first information reaches a predetermined relation with said reference value.

14. A method according to claim 13,further comprising the step of detecting a contact position of a key of said motor vehicle before controlling said actuator.

15. A method according to claim 13 or 14, further comprising the steps of:
- detecting (108; 210; 309) the standing of said lever (2) in a position chosen by the driver; and
- controlling (105; 207; 305) the actuator (9) so as to lock the ratchet mechanism (6) when the standing of said lever (2) is detected.

16. A method according to any of the claims from 13 to 15, further comprising the steps of:
- detecting a failure condition of a braking assembly of said motor vehicle;
- detecting a second quantity indicating a movement state of the motor vehicle;
- receiving (404), through the control unit (12), a braking assembly failure warning;
- extracting (403), through the control unit (12), second information associated with said second quantity;
- comparing (404) said second information with a movement threshold;
- controlling (406) the actuator (9) so as to release the ratchet mechanism at least when:
a) the control unit receives the failure warning, and
b) the second information equals or exceeds the movement threshold; and
- controlling (405) the actuator (9) so as to lock the ratchet mechanism (6) when the second information is below the movement threshold.

17. A method according to any one of the claims 13-16, wherein the first quantity (G1) is one among: an angle (α) of inclination of the lever (2) relative to said support structure (3), an acceleration vector (a) of the lever (2), a force (F) exerted by one between said lever (2) and said ratchet mechanism (6) upon the other one between said lever (2) and said ratchet mechanism (6).

## Patentansprüche

1. Feststellbremssystem (1) für ein Kraftfahrzeug, umfassend:
- eine Stützstruktur (3), die dazu geeignet ist, an einem Rahmen des Kraftfahrzeugs befestigt zu sein;
- einen Hebel (2), der drehbar gemäß einer ersten Drehrichtung, welche aus einer Ruheposition heraus beginnt, um eine Feststellbremse des Kraftfahrzeugs zu aktivieren, und gemäß einer zweiten Drehrichtung, welche der ersten Drehrichtung entgegengesetzt ist, um die Feststellbremse zu lösen oder zu deaktivieren, an die Stützstruktur (3) gekuppelt ist;
- einen Ratschenmechanismus (6), der betriebsfähig an den Hebel (2) gekuppelt ist und zum lösbaren Sperren der Drehung des Hebels in der zweiten Drehrichtung konfiguriert ist;
- ein Betätigungselement (9), das betriebsfähig an den Ratschenmechanismus (6) gekuppelt ist und zum Lösen des Ratschenmechanismus gesteuert werden kann, um eine Drehung in der zweiten Drehrichtung zuzulassen;
- einen ersten Messwandler (T1), der an zumindest einen des Hebels (2) und des Ratschenmechanismus (6) gekoppelt ist und zum Erkennen einer ersten Menge (G1), die die Drehung des Hebels in der ersten Drehrichtung anzeigt, und zum Erzeugen eines ersten umgewandelten Signals (S1) basierend auf der ersten erkannten Menge konfiguriert ist;
- eine Steuereinheit (12), die an den ersten Messwandler (T1) gekoppelt ist und zu Folgendem konfiguriert ist:
· Empfangen des ersten umgewandelten Signals (S1); und
· Extrahieren von erster Information in Zusammenhang mit der ersten Menge (G1) aus dem ersten umgewandelten Signal (S1),
**dadurch gekennzeichnet, dass** es ferner einen zweiten Messwandler (T2; T3) umfasst, der dazu geeignet ist, an eines eines Bremspedals und eines Gaspedals des Kraftfahrzeugs gekoppelt zu sein, und zum Erkennen der Aktivierung, durch einen Fahrer des Kraftfahrzeugs, von einem des Bremspedals und des Gaspedals und zum Erzeugen eines zweiten umgewandelten Signals (S2; S3) in Reaktion auf die Aktivierung konfiguriert ist;
und dadurch, dass die Steuereinheit (12) ferner zu Folgendem konfiguriert ist
· Empfangen des zweiten umgewandelten Signals (S2; S3) ;
· Vergleichen der ersten Information mit einem Referenzwert;
· Steuern des Betätigungselements (9) zum Lösen des Ratschenmechanismus (6), wenn das zweite umgewandelte Signal (S2; S3) empfangen wird und die erste Information eine vorgegebene Beziehung zum Referenzwert erreicht.

2. System nach Anspruch 1, ferner umfassend einen dritten Messwandler (T3; T2), der dazu geeignet ist, an das andere des Bremspedals und des Gaspedals des Kraftfahrzeugs gekoppelt zu sein, und zum Erkennen der Aktivierung, durch einen Fahrer des Kraftfahrzeugs, des anderen des Bremspedals und des Gaspedals und zum Erzeugen eines dritten umgewandelten Signals (S3; S2) in Reaktion auf die Aktivierung konfiguriert ist;
und wobei die Steuereinheit (12) ferner zu Folgendem konfiguriert ist:
- Empfangen des dritten umgewandelten Signals (S3; S2); und
- Steuern des Betätigungselements (9) zum Lösen des Ratschenmechanismus (6), wenn das zweite umgewandelte Signal (S2; S3) und/oder das dritte umgewandelte Signal empfangen wird und die erste Information die vorgegebene Beziehung zum Referenzwert erreicht.

3. System nach Anspruch 1 oder 2, wobei die Steuereinheit (12) ferner zu Folgendem konfiguriert ist:
· Erkennen einer Kontaktposition eines Schlüssels des Kraftfahrzeugs, und
· Steuern des Betätigungselements (9) zum Lösen des Ratschenmechanismus (6), wenn die Kontaktposition des Schlüssels weiter erkannt wird.

4. System nach einem der vorhergehenden Ansprüche, wobei der erste Messwandler (T1) ein Winkelgeber ist, und wobei:
· die erste Menge (G1) ein Neigungswinkel (α) des Hebels (2) bezüglich der Stützstruktur (3) ist,
· die erste Information eine Zunahme des Neigungswinkels (α₂-α₁) in der ersten Drehrichtung umfasst, und
· die vorgegebene Beziehung erreicht ist, wenn die Zunahme des Neigungswinkels (α₂-α₁) gleich dem Referenzwert (αₜₕ) ist oder diesen Übersteigt.

5. System nach einem der Ansprüche 1 bis 3, ferner umfassend einen vierten Messwandler (TG), der zum Erkennen einer ersten Komponente der Gravitationsbeschleunigung der Erde entlang einer Achse (C) konfiguriert ist, wobei der erste Messwandler (T1) ein Beschleunigungssensor ist, und wobei:
· die erste Menge ein Beschleunigungsvektor (a) des Hebels (2) ist;
· die Steuereinheit (12) zum Erfassen des Beschleunigungsvektors, Extrahieren einer zweiten Beschleunigungskomponente (a_{c}) des Hebels (2) entlang der Achse (C), Subtrahieren der ersten Komponente von der zweiten Beschleunigungskomponente, wodurch die erste Information (aₑ) erhalten wird, konfiguriert ist;
· die vorgegebene Beziehung erreicht ist, wenn die erste Information (aₑ) gleich dem Referenzwert (aₜₕ) ist oder diesen übersteigt.

6. System nach einem der Ansprüche 1 bis 3, wobei der erste Messwandler (T1) ein Kraftaufnehmer ist, und wobei:
· die erste Menge (G1) eine Kraft (F) ist, die durch einen des Hebels (2) und des Ratschenmechanismus (6) auf den anderen des Hebels (2) und des Ratschenmechanismus (6) ausgeübt wird;
· die erste Information eine Abnahme (Fₚ-F_{c}) der Kraft (F) umfasst; und
· die vorgegebene Beziehung erreicht ist, wenn die Abnahme der Kraft (Fₚ-F_{c}) gleich dem Referenzwert (ΔFₜₕ) ist oder diesen übersteigt.

7. System nach einem der Ansprüche 1 bis 3, wobei, wenn der Hebel (2) in einer Position steht, die vom Fahrer gewählt ist, die erste Menge (G1) den Stand des Hebels (2) anzeigt,
wobei die Steuereinheit (12) ferner zum Steuern des Betätigungselements (9) zum Sperren des Ratschenmechanismus (6) konfiguriert ist, wenn die erste Menge (G1) den Stand des Hebels (2) anzeigt.

8. System nach Anspruch 7, wobei der erste Messwandler (T1) ein Winkelgeber ist, und wobei:
· die erste Menge (G1) ein Neigungswinkel (α) des Hebels (2) bezüglich der Stützstruktur (3) ist;
· die erste Menge (G1) den Stand des Hebels (2) in der vom Fahrer gewählten Position anzeigt, wenn eine Veränderung des Neigungswinkels (Δα) für einen vorgegebenen Zeitintervall (Δt) gleich Null ist oder der Neigungswinkel (α) der Ruheposition des Hebels (2) entspricht.

9. System nach Anspruch 8, ferner umfassend einen vierten Messwandler (TG), der zum Erkennen einer ersten Komponente der Gravitationsbeschleunigung der Erde entlang einer Achse (C) konfiguriert ist, wobei der erste Messwandler (T1) ein Beschleunigungssensor ist, und wobei:
· die erste Menge ein Beschleunigungsvektor (a) des Hebels (2) ist;
· die Steuereinheit (12) zum Erfassen des Beschleunigungsvektors (a), Extrahieren einer zweiten Beschleunigungskomponente (a_{c}) des Hebels (2) entlang der Achse (C), Subtrahieren der ersten Komponente von der zweiten Beschleunigungskomponente, wodurch die erste Information (aₑ) erhalten wird, konfiguriert ist:
· die erste Menge (G1) den Stand des Hebels (2) in der vom Fahrer gewählten Position anzeigt, wenn das Ergebnis der Subtraktion ein Nullwert für einen vorgegebenen Zeitintervall (Δt') ist.

10. System nach einem der Ansprüche 1 bis 3 und umfassend einen fünften Messwandler (T4), der betriebsfähig an den Hebel (2) gekoppelt ist und zum Erkennen einer zweiten Menge, die einen Stand des Hebels in einer vom Fahrer gewählten Position anzeigt, und zum Erzeugen eines vierten umgewandelten Signals (S4) basierend auf der zweiten Menge konfiguriert ist,
wobei die Steuereinheit (12) ferner zu Folgendem konfiguriert ist:
· Empfangen des vierten umgewandelten Signals (S4); und
· Extrahieren, aus dem vierten umgewandelten Signal (S4), von zweiter Information, die den Stand des Hebels in der vom Fahrer gewählten Position betrifft;
· Steuern, basierend auf der zweiten Information, des Betätigungselements (9) zum Sperren des Ratschenmechanismus (6).

11. System nach Anspruch 10, wobei:
· die zweite Menge eine Verschiebung (x) des Hebels (2) ist;
· die zweite Information eine Veränderung (Δx) der Verschiebung (x) umfasst; und
· die Steuereinheit (12) ferner zum Steuern des Betätigungselements (9) zum Sperren des Ratschenmechanismus (6) konfiguriert ist, wenn die Veränderung (Δx) einen Nullwert für einen vorgegebenen Zeitintervall (Δt") aufweist.

12. System nach einem der vorhergehenden Ansprüche, ferner umfassend Ausfallsensoren (15), die zum Erkennen einer Ausfallbedingung einer Bremsbaugruppe des Kraftfahrzeugs konfiguriert sind, und einen sechsten Messwandler (T5), der zum Erkennen einer dritten Menge, die einen Bewegungszustand des Kraftfahrzeugs anzeigt, und zum Erzeugen eines fünften umgewandelten Signals (S5) basierend auf der dritten Menge konfiguriert ist,
wobei die Steuereinheit zum Empfangen einer Bremsbaugruppenausfallwarnung an die Ausfallsensoren (15) gekoppelt ist und ferner zu Folgendem konfiguriert ist:
· Empfangen des fünften umgewandelten Signals (S5);
· Extrahieren, aus dem fünften umgewandelten Signal (S5), von dritter Information (ω) in Zusammenhang mit der dritten Menge;
· Vergleichen der dritten Information (ω) mit einer Bewegungsschwelle (ωₜₕ);
· Steuern des Betätigungselements (9) zum Lösen des Ratschenmechanismus (6) zumindest dann, wenn:
a) sie die Ausfallwarnung empfängt, und
b) die dritte Information (ω) gleich der Bewegungsschwelle (ωₜₕ) ist oder diese übersteigt; und
· Steuern des Betätigungselements (9) zum Sperren des Ratschenmechanismus (6), wenn die dritte Information (ω) unterhalb der Bewegungsschwelle (ωₜₕ) liegt.

13. Verfahren zum Lösen eines Feststellbremssystems (1) für ein Kraftfahrzeug, das System umfassend:
- eine Stützstruktur (3), die dazu geeignet ist, an einem Rahmen des Kraftfahrzeugs befestigt zu sein;
- einen Hebel (2), der drehbar gemäß einer ersten Drehrichtung, welche aus einer Ruheposition heraus beginnt, um eine Feststellbremse des Kraftfahrzeugs zu aktivieren, und gemäß einer zweiten Drehrichtung, welche der ersten Drehrichtung entgegengesetzt ist, um die Feststellbremse zu lösen oder zu deaktivieren, an die Stützstruktur (3) gekuppelt ist;
- einen Ratschenmechanismus (6), der an den Hebel (2) gekuppelt ist und zum Sperren der Drehung des Hebels (2) in der zweiten Drehrichtung konfiguriert ist;
- ein Betätigungselement (9), das betriebsfähig an den Ratschenmechanismus (6) gekuppelt ist und zum Lösen des Ratschenmechanismus (6) gesteuert werden kann, um eine Drehung in der zweiten Drehrichtung zuzulassen,
wobei das Verfahren den Schritt des Erkennens, mithilfe eines ersten Messwandlers (T1), der an zumindest einen des Hebels (2) und des Ratschenmechanismus (6) gekoppelt ist, einer ersten Menge (G1), die die Drehung des Hebels in der ersten Drehrichtung anzeigt, und des Erzeugens eines ersten umgewandelten Signals (S1) basierend auf der ersten erkannten Menge (G1) umfasst,
**dadurch gekennzeichnet, dass** es ferner die folgenden Schritte umfasst:
- Erkennen, mithilfe eines zweiten Messwandlers (T2; T3), der dazu geeignet ist, an eines eines Bremspedals und eines Gaspedals des Kraftfahrzeugs gekoppelt zu sein, der Aktivierung, durch einen Fahrer des Kraftfahrzeugs, von einem des Bremspedals und des Gaspedals und Erzeugen eines zweiten umgewandelten Signals (S2; S3) in Reaktion auf die Aktivierung;
- Empfangen (102; 203; 302), über eine Steuereinheit (12), des ersten umgewandelten Signals (S1);
- Extrahieren (103; 204; 303), mithilfe der Steuereinheit (12), von erster Information in Zusammenhang mit der ersten Menge (G1) aus dem ersten umgewandelten Signal (S1);
- Empfangen (104; 206; 304), über die Steuereinheit (12), des zweiten umgewandelten Signals (S2; S3);
- Vergleichen (104; 206; 304), mithilfe der Steuereinheit (12), der ersten Information mit einem Referenzwert; und
- Steuern (105; 207; 305), mithilfe der Steuereinheit (12), des Betätigungselements (9) zum Lösen des Ratschenmechanismus (6), wenn das zweite umgewandelte Signal (S2; S3) empfangen wird und die erste Information eine vorgegebene Beziehung zum Referenzwert erreicht.

14. Verfahren nach Anspruch 13, ferner umfassend den Schritt des Erkennens einer Kontaktposition eines Schlüssels des Kraftfahrzeugs vor dem Steuern des Betätigungselements.

15. Verfahren nach Anspruch 13 oder 14, ferner umfassend die folgenden Schritte:
- Erkennen (108; 210; 309) des Stands des Hebels (2) in einer vom Fahrer gewählten Position; und
- Steuern (105; 207; 305) des Betätigungselements (9) zum Sperren des Ratschenmechanismus (6), wenn der Stand des Hebels (2) erkannt wird.

16. Verfahren nach einem der Ansprüche 13 bis 15, ferner umfassend die folgenden Schritte:
- Erkennen einer Ausfallbedingung einer Bremsbaugruppe des Kraftfahrzeugs;
- Erkennen einer zweiten Menge, die einen Bewegungszustand des Fahrzeugs anzeigt;
- Empfangen (404), über die Steuereinheit (12), einer Bremsbaugruppenausfallwarnung;
- Extrahieren (403), über die Steuereinheit (12), von zweiter Information in Zusammenhang mit der zweiten Menge;
- Vergleichen (404) der zweiten Information mit einer Bewegungsschwelle;
- Steuern (406) des Betätigungselements (9) zum Lösen des Ratschenmechanismus zumindest dann, wenn:
a) die Steuereinheit die Ausfallwarnung empfängt, und
b) die zweite Information gleich der Bewegungsschwelle ist oder diese übersteigt; und
- Steuern (405) des Betätigungselements (9) zum Sperren des Ratschenmechanismus (6), wenn die zweite Information unterhalb der Bewegungsschwelle liegt.

17. Verfahren gemäß einem der Ansprüche 13 bis 16, wobei die erste Menge eines von Folgendem ist: ein Neigungswinkel (α) des Hebels (2) bezüglich der Stützstruktur (3), ein Beschleunigungsvektor (a) des Hebels (2), eine Kraft (F), die durch einen des Hebels (2) und des Ratschenmechanismus (6) auf den anderen des Hebels (2) und des Ratschenmechanismus (6) ausgeübt wird.

## Revendications

1. Système de frein de stationnement (1) pour un véhicule à moteur comprenant :
une structure de support (3) appropriée pour être fixée à un châssis dudit véhicule à moteur ;
un levier (2) qui est couplé à la structure de support (3) d'une manière rotative selon une première direction de rotation à partir d'une position de repos, afin d'activer un frein de stationnement du véhicule à moteur, et selon une seconde direction de rotation, qui est opposée à la première direction de rotation, afin de desserrer ou de désactiver le frein de stationnement ;
un mécanisme à cliquet (6) qui est couplé, de manière opérationnelle, au levier (2) et est configuré pour verrouiller la rotation du levier dans la seconde direction de rotation d'une manière amovible ;
un actionneur (9) qui est couplé, de manière opérationnelle, au mécanisme à cliquet (6) et peut être commandé afin de libérer le mécanisme à cliquet pour permettre une rotation dans la seconde direction de rotation ;
un premier transducteur (T1) qui est couplé à au moins l'un parmi ledit levier (2) et ledit mécanisme à cliquet (6) et est configuré pour détecter une première quantité indicative de la rotation du levier dans la première direction de rotation et pour générer un premier signal transduit (S1) sur la base de la première quantité détectée ;
une unité de commande (12) qui est couplée au premier transducteur (T1) et est configurée pour :
recevoir le premier signal transduit (S1) ; et
extraire la première information associée à la première quantité (G1), du premier signal transduit (S1),
**caractérisé en ce qu'**il comprend en outre un deuxième transducteur (T2 ; T3) qui est approprié pour être couplé à l'une parmi une pédale de frein et une pédale d'accélérateur dudit véhicule à moteur et est configuré pour détecter l'activation, par un conducteur du véhicule à moteur, de l'une parmi la pédale de frein et la pédale d'accélérateur, et pour générer un deuxième signal transduit (S2 ; S3) en réponse à ladite activation ;
et **en ce que** l'unité de commande (12) est en outre configurée pour :
recevoir le deuxième signal transduit (S2 ; S3) ;
comparer la première information avec une valeur de référence ;
commander ledit actionneur (9) afin de libérer le mécanisme à cliquet (6) lorsque le deuxième signal transduit (S2 ; S3) est reçu et que la première information atteint une relation prédéterminée avec la valeur de référence.

2. Système selon la revendication 1, comprenant en outre un troisième transducteur (T3 ; T2) qui est approprié pour être couplé à l'autre parmi la pédale de frein et la pédale d'accélérateur dudit véhicule à moteur et est configuré pour détecter l'activation, par un conducteur du véhicule à moteur, de l'autre parmi la pédale de frein et la pédale d'accélérateur, et pour générer un troisième signal transduit (S3 ; S2) en réponse à ladite activation ;
et en ce que l'unité de commande (12) est en outre configurée pour :
recevoir le troisième signal transduit (S3 ; S2) ; et
commander l'actionneur (9) afin de libérer le mécanisme à cliquet (6) lorsque le deuxième signal transduit (S2 ; S3) et/ou le troisième signal transduit est/sont reçu(s) et que la première information atteint la relation prédéterminée avec la valeur de référence.

3. Système selon la revendication 1 ou 2, dans lequel l'unité de commande (12) est en outre configurée pour :
détecter une position de contact d'une clé dudit véhicule à moteur, et
commander ledit actionneur (9) afin de libérer le mécanisme à cliquet (6) lorsque la position de contact de la clé est en outre détectée.

4. Système selon l'une quelconque des revendications précédentes, dans lequel le premier transducteur (T1) est un transducteur d'angle, et dans lequel :
la première quantité (G1) est un angle (α) d'inclinaison du levier (2) par rapport à ladite structure de support (3),
la première information comprend une augmentation de l'angle d'inclinaison (α₂-α₁) dans la première direction de rotation, et
ladite relation prédéterminée est atteinte lorsque ladite augmentation de l'angle d'inclinaison (α₂-α₁) est égale ou supérieure à la valeur de référence (αₜₕ).

5. Système selon l'une quelconque des revendications 1 à 3, comprenant en outre un quatrième transducteur (TG) qui est configuré pour détecter un premier composant de l'accélération gravitationnelle de la Terre le long d'un axe (C), le premier transducteur (T1) est un capteur d'accélération, et dans lequel :
ladite première quantité est un vecteur d'accélération (a) dudit levier (2) ;
ladite unité de commande (12) est configurée pour acquérir le vecteur d'accélération, extraire un second composant d'accélération (a_{c}) du levier (2) le long dudit axe (C), soustraire le premier composant du second composant d'accélération, obtenant la première information (aₑ) ;
ladite relation prédéterminée étant atteinte lorsque la première information (aₑ) est égale ou supérieure à ladite valeur de référence (aₜₕ).

6. Système selon l'une quelconque des revendications 1 à 3, dans lequel le premier transducteur (T1) est un transducteur de force, et dans lequel :
ladite première quantité (G1) est une force (F) exercée par l'un parmi ledit levier (2) et ledit mécanisme à cliquet (6) sur l'autre parmi ledit levier (2) et ledit mécanisme à cliquet (6) ;
ladite première information comprend une réduction (Fₚ-F_{C}) de ladite force (F) ; et
ladite relation prédéterminée est atteinte lorsque la réduction de ladite force (Fₚ-F_{C}) est égale ou supérieure à ladite valeur de référence (ΔFₜₕ).

7. Système selon l'une quelconque des revendications 1 à 3, dans lequel, lorsque ledit levier (2) est dans une position choisie par le conducteur, ladite première quantité (G1) est indicative du positionnement du levier (2),
l'unité de commande (12) étant en outre configurée pour commander l'actionneur (9) afin de verrouiller le mécanisme à cliquet (6) lorsque la première quantité (G1) est indicative du positionnement dudit levier (2).

8. Système selon la revendication 7, dans lequel le premier transducteur (T1) est un transducteur d'angle, et dans lequel :
ladite première quantité (G1) est un angle (α) d'inclinaison du levier (2) par rapport à ladite structure de support (3) ;
ladite première quantité (G1) est indicative du positionnement du levier (2) dans la position choisie par le conducteur, lorsqu'une variation de l'angle d'inclinaison (Δα) est égale à zéro pendant un intervalle de temps (Δt) prédéterminé ou ledit angle d'inclinaison (α) correspond à la position de repos du levier (2).

9. Système selon la revendication 8, comprenant en outre un quatrième transducteur (TG) qui est configuré pour détecter un premier composant de l'accélération gravitationnelle de la Terre le long d'un axe (C), le premier transducteur (T1) étant un capteur d'accélération, et dans lequel :
ladite première quantité est un vecteur d'accélération (a) dudit levier (2) ;
ladite unité de commande (12) est configurée pour acquérir le vecteur d'accélération (a), extraire un second composant d'accélération (a_{c}) du levier (2) le long dudit axe (C), soustraire le premier composant du second composant d'accélération, obtenant ainsi la première information (aₑ) ;
ladite première quantité (G1) étant indicative du positionnement du levier (2) dans la position choisie par le conducteur, lorsque le résultat de ladite soustraction est une valeur nulle pour un intervalle de temps (Δt') prédéterminé.

10. Système selon l'une quelconque des revendications 1 à 3 et comprenant un cinquième transducteur (T4) qui est couplé, de manière opérationnelle, au levier (2) et est configuré pour détecter une deuxième quantité indicative d'un positionnement du levier dans une position choisie par le conducteur et pour générer un quatrième signal transduit (S4) sur la base de la deuxième quantité,
l'unité de commande (12) étant en outre configurée pour :
recevoir le quatrième signal transduit (S4) ; et
extraire, du quatrième signal transduit (S4), la deuxième information concernant le positionnement du levier dans la position choisie par le conducteur ;
commander, sur la base de la deuxième information, l'actionneur (9) afin de verrouiller le mécanisme à cliquet (6).

11. Système selon la revendication 10, dans lequel :
la deuxième quantité est un déplacement (x) du levier (2) ;
la deuxième information comprend une variation (Δx) dudit déplacement (x) ; et
l'unité de commande (12) est en outre configurée pour commander l'actionneur (9) afin de verrouiller le mécanisme à cliquet (6) lorsque ladite variation (Δx) a une valeur nulle pendant un intervalle de temps (Δt") prédéterminé.

12. Système selon l'une quelconque des revendications précédentes, comprenant en outre des capteurs de défaillance (15) qui sont configurés pour détecter une condition de défaillance d'un ensemble de freinage dudit véhicule à moteur, et un sixième transducteur (T5) qui est configuré pour détecter une troisième quantité indicative d'un état mobile du véhicule à moteur et pour générer un cinquième signal transduit (S5) sur la base de ladite troisième quantité,
l'unité de commande étant couplée aux capteurs de défaillance (15) afin de recevoir un avertissement de défaillance d'ensemble de freinage et étant en outre configurée pour :
recevoir le cinquième signal transduit (S5) ;
extraire, du cinquième signal transduit (S5), la troisième information (ω) associée à la troisième quantité ;
comparer la troisième information (ω) avec un seuil de déplacement (ωₜₕ) ;
commander ledit actionneur (9) afin de libérer le mécanisme à cliquet (6) au moins lorsque :
a) il reçoit ledit avertissement de défaillance, et
b) la troisième information (ω) est égale ou supérieure au seuil de déplacement (ωₜₕ) ; et
commander l'actionneur (9) afin de verrouiller le mécanisme à cliquet (6) lorsque ladite troisième information (ω) est inférieure au seuil de déplacement (ωₜₕ).

13. Procédé pour libérer un système de frein de stationnement (1) pour un véhicule à moteur, le système comprenant :
une structure de support (3) appropriée pour être fixée à un châssis dudit véhicule à moteur ;
un levier (2) qui est couplé à la structure de support (3) d'une manière rotative selon une première direction de rotation à partir d'une position de repos, afin d'activer un frein de stationnement du véhicule à moteur, et selon une seconde direction de rotation, qui est opposée à la première direction de rotation, afin de desserrer ou de désactiver le frein de stationnement ;
un mécanisme à cliquet (6) qui est couplé au levier (2) et est configuré pour verrouiller la rotation du levier (2) dans la seconde direction de rotation d'une manière amovible ;
un actionneur (9) qui est couplé, de manière opérationnelle, au mécanisme à cliquet (6) et peut être commandé afin de libérer le mécanisme à cliquet (6) pour permettre une rotation dans la seconde direction de rotation,
le procédé comprenant l'étape pour détecter, au moyen d'un premier transducteur (T1), qui est couplé à au moins l'un parmi ledit levier (2) et ledit mécanisme à cliquet (6), une première quantité (G1) indicative de la rotation du levier dans la première direction de rotation et générer un premier signal transduit (S1) sur la base de la première quantité (G1) détectée,
**caractérisé en ce qu'**il comprend en outre les étapes pour :
détecter, au moyen d'un deuxième transducteur (T2 ; T3), qui est approprié pour être couplé à l'une parmi une pédale de frein et une pédale d'accélérateur dudit véhicule à moteur, l'activation, par un conducteur du véhicule à moteur, de l'une parmi la pédale de frein et la pédale d'accélérateur, et générer un deuxième signal transduit (S2 ; S3) en réponse à ladite activation ;
recevoir (102 ; 203 ; 302), par le biais d'une unité de commande (12), le premier signal transduit (S1) ;
extraire (103 ; 204 ; 303), au moyen de l'unité de commande (12), la première information associée à la première quantité (G1) du premier signal transduit (S1) ;
recevoir (104 ; 206 ; 304), par le biais de l'unité de commande (12), le deuxième signal transduit (S2 ; S3) ;
comparer (104 ; 206 ; 304), au moyen de l'unité de commande (12), la première information avec une valeur de référence ; et
commander (105 ; 207 ; 305), au moyen de l'unité de commande (12), l'actionneur (9) afin de libérer le mécanisme à cliquet (6) lorsque le deuxième signal transduit (S2 ; S3) est reçu et que la première information atteint une relation prédéterminée avec ladite valeur de référence.

14. Procédé selon la revendication 13, comprenant en outre l'étape pour détecter une position de contact d'une clé dudit véhicule à moteur avant de commander ledit actionneur.

15. Procédé selon la revendication 13 ou 14, comprenant en outre les étapes pour :
détecter (108 ; 210 ; 309) le positionnement dudit levier (2) dans une position choisie par le conducteur ; et
commander (105 ; 207 ; 305) l'actionneur (9) afin de verrouiller le mécanisme à cliquet (6) lorsque le positionnement dudit levier (2) est détecté.

16. Procédé selon l'une quelconque des revendications 13 à 15, comprenant en outre les étapes pour :
détecter une condition de défaillance d'un ensemble de freinage dudit véhicule à moteur ;
détecter une deuxième quantité indiquant un état de déplacement du véhicule à moteur ;
recevoir (404), par le biais de l'unité de commande (12), un avertissement de défaillance d'ensemble de freinage ;
extraire (403), par le biais de l'unité de commande (12), la deuxième information associée à ladite deuxième quantité ;
comparer (404) ladite deuxième information avec un seuil de déplacement ;
commander (406) l'actionneur (9) afin de libérer le mécanisme à cliquet au moins lorsque :
a) l'unité de commande reçoit l'avertissement de défaillance, et
b) la deuxième information est égale ou supérieure au seuil de déplacement ; et
commander (405) l'actionneur (9) afin de verrouiller le mécanisme à cliquet (6) lorsque la deuxième information est inférieure au seuil de déplacement.

17. Procédé selon l'une quelconque des revendications 13 à 16, dans lequel la première quantité (G1) est l'un parmi : un angle (α) d'inclinaison du levier (2) par rapport à ladite structure de support (3), un vecteur d'accélération (a) du levier (2), une force (F) exercée par l'un parmi ledit levier (2) et ledit mécanisme à cliquet (6) sur l'autre parmi ledit levier (2) et ledit mécanisme à cliquet (6).
